# EUROPÄISCHE PATENTSCHRIFT

(11) **EP 0 449 001 B1**
(45) Veröffentlichungstag und Bekanntmachung des Hinweises auf die Patenterteilung: **18.05.1994**
(21) Anmeldenummer: 91103443.7
(22) Anmeldetag: 07.03.1991
(51) Int. Cl.: B64G 1/66, F16C 11/12

(54) **Spiel- und reibungsfreies Universalgelenk**
Frictionless universal joint with absence of play
Joint universel sans jeu et sans friction

(30) Priorität: 29.03.1990 DE 4010041
(43) Veröffentlichungstag der Anmeldung: 02.10.1991
(73) Patentinhaber: ERNO Raumfahrttechnik Gesellschaft mit beschränkter Haftung, D-28199 Bremen (DE)
(72) Erfinder: Hornung, Ernst, W-2805 Stuhr 1 (DE); Öry, Huba, Prof. Dr., W-5100 Aachen (DE)
(74) Vertreter: Schramm, Ewald Werner Josef

(56) Entgegenhaltungen:
- EP-A- 0 126 671
- FR-A- 2 372 346
- GB-A- 949 975
- GB-A- 2 001 709
- US-A- 3 727 865

## Beschreibung

Die Erfindung bezieht sich auf eine Vorrichtung zur entkoppelten Befestigung einer Nutzlast an einem Tragkörper, insbesondere an einem Satellitenkörper über mit einem Gestell verbundene, flexible Verbindungselemente, wobei das Verbindungselement aus einem Gelenk mit einem äußeren Gelenkkörper besteht, das im Tragkörper über mindestens zwei elastische Elemente gehalten ist und innerhalb des äußeren Gelenkkörpers über weitere elastische Elemente ein innerer Gelenkkörper lagert.

Aus der EU-A-126 671 sind Verbindungselemente zur Fixierung einer Nutzlast an einem Tragkörper bekannt, die aus flexiblen Platten bestehen und gekreuzt zueinander angeordnet sind. Über Befestigungselemente sind sie eingespannt in diesen gehalten und bilden ein Gelenk. Mit solchen Verbindungselementen sind Störeinflüsse, wie Spiel und/oder Reibung nicht so weit ausschaltbar, daß sie innerhalb von vorgegebenen Toleranzen bleiben können, und somit ist kein statisch bestimmter Anschluß gewährleistet, so daß es durch unbeabsichtigt übertragene und undefinierte Montagemomente zu Nichtlinearitäten führt.

Aus der GB-PS 949 975 ist ein Gelenkelement bekannt, das in einem Tragkörper angeordnet ist und einen an diesem elastisch gehaltenen äußeren Gelenkkörper aufweist, der mit einem inneren Gelenkkörper über elastische Elemente verbunden ist. Diese Elemente der Gelenkkörper sind jeweils fluchtend zueinander angeordnet.

Aufgabe der Erfindung ist es, eine verbesserte Vorrichtung zur entkoppelten Verbindung zu schaffen, die statisch bestimmbar ist.

Diese Aufgabe wird erfindungsgemäß dadurch gelöst, daß die elastischen Elemente des äußeren Gelenkkörpers aus in den Außenwandungen gehaltenen federnden Streben bestehen, die sich kreuzend angeordnet sind und jeweils im Kreuzungspunkt fluchtenden innere Verbindungsachsen für den Gelenkkörper aufnehmen, der integrierte Federelemente aufweist, an denen sich das Gestell abstützt und senkrecht zu diesen inneren Verbindungsachsen die weiteren äußeren Verbindungsachsen angeordnet und mit dem Element verbunden sind und diese Achsen mit den inneren Achsen sich in einem Punkt innerhalb des Gelenkes schneiden, wobei senkrecht auf diesen Achsen eine weitere Verbindungsachse steht.

Weitere vorteilhafte Merkmale beinhalten die Unteransprüche.

Die mit der Erfindung hauptsächlich erzielten Vorteile bestehen darin, daß das Gelenk eine maximale Spielfreiheit aufweist und die übertragenen Momente klein sind und linear mit dem Verdrehwinkel wachsen, wobei die übertragenden Momente bestimmbar bleiben. Außerdem sind die Gelenke sehr robust ausgeführt.

Eine Verwendung dieser Gelenke ist beispielsweise erforderlich, wenn zwei miteinander verbundene Körper statisch entkoppelt werden sollen. Auch ist eine Verwendung dieser Gelenke für einen Einsatz erforderlich, wenn eine wärmestabile Antennenplattform aus CFK von Verformungen eines Satellitenkörpers, der meist aus einer Aluminium-Legierung besteht, isoliert werden soll. Ähnliche Anwendungen ergeben sich bei optischen bzw. elektromagnetischen Teleskopspiegeln und bei der Lagerung von Flüssiggas. Des weiteren ist die Lagerung von großen Teleskopen auf der Erde oder auf astronomischen Beobachtungsplattformen auf einer Umlaufbahn möglich.

Durch das Gelenk ist ein statisch bestimmter Anschluß gewährleistet, mit dem z.B. bei einem Kugelgelenk die auftretenden Störeinflüsse vermieden bzw. innerhalb der vorgegebenen Toleranz bleiben. Solche Störeinflüsse sind Spiel (Freilauf und/oder Reibung), sowie unbeabsichtigt übertragene und undefinierte Montagemomente, welche zu Nichtlinearitäten führen können.

Durch die zwei senkrecht aufeinanderstehenden Achsen des äußeren Gelenkkörpers sowie deren Lagerung in "cross-flextures" wird quasi ein Kardangelenk ersetzt, welches zwar Verdrehungen um die aufeinanderstehenden Achsen zulassen würde, aber nicht um eine zu dieser Achse im rechten Winkel stehende weitere Achse. Diese Achse wird durch den inneren Gelenkkörper gebildet, das in sich wieder ein Kardangelenk bildet und hierzu die weitere Achse in "cross-flexture" gelagert ist. Somit wird in vorteilhafter Weise zwischen zwei Körpern, nämlich dem Gestell und dem Tragbeschlag, eine feste Verbindung mit Verdrehmöglichkeiten um die drei aufeinander senkrecht stehenden Achsen geschaffen.

Durch die Erfindung wird ein bekanntes Kugelgelenk ersetzt, das sowohl Reibung als auch Spiel aufweist. Gegenüber einem solchen Gelenk sind mit dem erfindungsgemäßen Gelenk kleine, begrenzte Verdrehungen möglich, die von kleinen elastischen Rückstellmomenten begleitet sind.

Ein Ausführungsbeispiel der Erfindung ist in der Zeichnung schematisch dargestellt. Es zeigen:
- Fig. 1: eine Darstellung eines Gelenks mit Anbindung an ein Gestell und eine Nutzlast,
- Fig. 1a: eine Darstellung einer Anwendung,

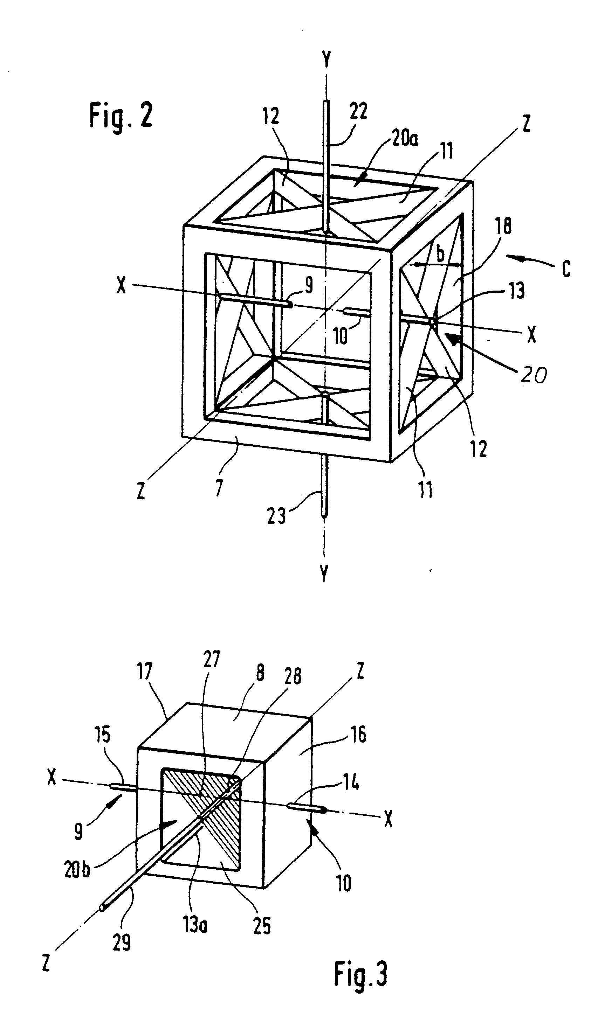

- Fig. 2: einen äußeren Gelenkkörper des Gelenks mit seinen Verbindungsachsen zu einem inneren Gelenkkörper,
- Fig. 3: den inneren Gelenkkörper mit den angedeuteten Verbindungsachsen zum äußeren Gelenkkörper sowie zum Gestell,
- Fig. 4: das zusammengebaute Gelenk, bestehend aus den äußeren und dem inneren Gelenkkörper in einer Ansicht in Pfeilrichtung A der Fig. 1 gesehen,
- Fig. 5: das zusammengebaute Gelenk in einer Ansicht in Pfeilrichtung B der Fig. 1 gesehen und
- Fig. 6: das Federelement mit federnd nachgiebigen Rippen in Pfeilrichtung C der Fig. 2 gesehen.

Das Verbindungselement 1 zwischen einem Gestell 2 und einer Nutzlast 2 bzw. zwischen einem Gestell 2 und einem Tragkörper 4 umfaßt im wesentlichen ein federnd nachgiebiges Gelenk 5 und einen Tragbeschlag 6.

Das Gelenk 5 besteht aus einem äußeren Gelenkkörper 7 und einem inneren Gelenkkörper 8. Diese Gelenkkörper 7 und 8 sind als Würfel ausgeführt und ineinandergesetzt, wobei der innere Gelenkkörper 8 über Verbindungsachsen 9,10 in einer Ebene X-X im äußeren Gelenkkörper 7 federnd nachgiebig gehalten wird.

Die Verbindungsachsen 9 und 10 sind in der Ebene X-X achsgleich angeordnet und im äußeren Gelenkkörper 7 in Federelementen 20 aus gekreuzten, nachgiebig federnden Streben 11 und 12 im Kreuzungspunkt 13 unverdrehbar befestigt. Die abgekehrten freien Enden 14 und 15 der Achse 9 und 10 sind in der jeweiligen starren Seitenwand 16 und 17 des inneren Gelenkkörpers 8 gehalten.

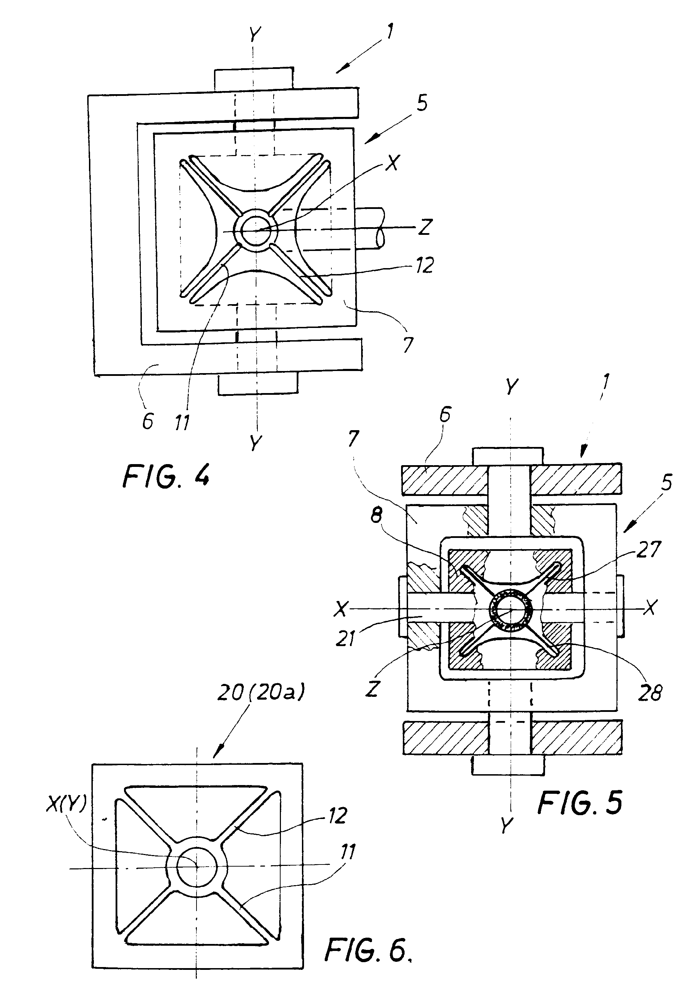

Die gekreuzten Streben 11 und 12 des Federelementes 20 erstrecken sich jeweils in den Seitenwänden des Würfels des äußeren Gelenkkörpers 7 diagonal von einer Ecke zur anderen Ecke einer Wandaussparung 18. Sie sind mit einer definierten Breite b ausgeführt, die flächig in Achsrichtung der Verbindungsachsen 9 und 10 verläuft. In Fig. 6 ist ein Federelement 20,20a näher dargestellt, wobei, wie auch die Fig. 4 und 5 näher zeigen, die Verbindungsachsen 9 und 10 aus Bolzen 21 bestehen können, die z.B. durch eine Schrumpfverbindung in den starren Wandungen 16 und 17 des inneren Gelenkkörpers 8 oder mit den Federelementen 20 verbunden sein können.

Am äußeren Gelenkkörper 7 sind weitere Verbindungsachsen 22 und 23 in einer Ebene Y-Y, die rechtwinklig zur Ebene X-X angeordnet ist, mit einem Ende fest in Federelementen 20a verbunden, gehalten. Diese Federelemente 20a bestehen auch aus gekreuzten Streben 11 und 12, welche federnd nachgiebig ausgeführt sind.

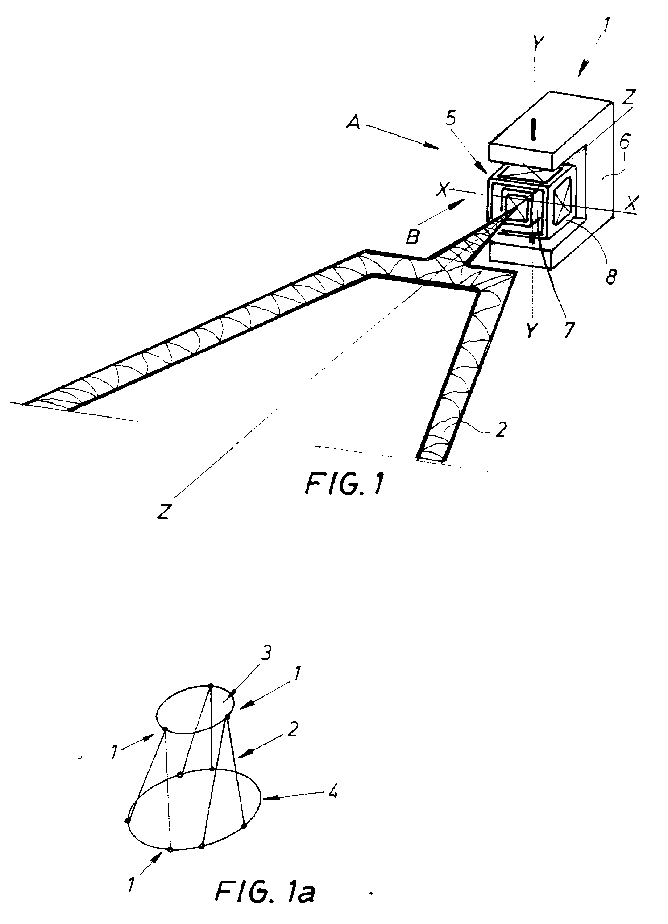

Diese Achsen 22 und 23 sind mit ihrem freien Ende in einem Tragbeschlag 6 befestigt, der mit einer Nutzlast 3 verbunden sein kann, wie insbesondere Fig. 1a näher zeigt. Der Tragbeschlag 6 ist z.B. u-förmig ausgeführt und umgreift das Gelenk 5 von zwei Seiten mit einem gewissen Freiraum.

Der innere Gelenkkörper 8 weist eine im Querschnitt quadratische Durchdringung 25 auf, in der ein Federelement 20b aus gekreuzten Streben 27 und 28 diagonal verlaufend angeordnet ist. Über eine im Kreuzungspunkt 13a befestigte Verbindungsachse 29, die in einer Ebene Z-Z verläuft, welche rechtwinklig zur Ebene X-X angeordnet ist, wird das Gestell 2 mit dem Gelenk 5 verbunden.

Die Verbindungsachsen 9,10 und 22,23 und 29 werden mit den nachgiebig federnden Streben 11,12 und 27,28 z.B. durch einen Schrumpfanschluß verbunden. Der einwandfreie Sitz kann mit definiertem Übermaß und Montage unter Temperaturdifferenz erreicht werden. Dabei könnte der Gelenkkörper 7 und 8 auf etwa 200°C aufgewärmt und die Bolzen auf Flüssigstickstofftemperatur abgekühlt werden. Die Teile bestehen vorzugsweise aus einer hochfesten Stahl- oder Titanlegierung.

Das Gelenk 5 ist aufgrund der in Federelementen 20,20a und 20b gehaltenen Bolzen spiel- und reibungsfrei, und es werden nur kleine, definierte und voraussehbare Momente übertragen.

## Patentansprüche

1. Vorrichtung zur entkoppelten Befestigung einer Nutzlast an einem Tragkörper (6), insbesondere an einem Satellitenkörper über mit einem Gestell verbundene, flexible Verbindungselemente (1), wobei das Verbindungselement (1) aus einem Gelenk (5) mit einem äußeren Gelenkkörper (7) besteht, das im Tragkörper (6) über mindestens zwei elastische Elemente (20a) gehalten ist und innerhalb des äußeren Gelenkkörpers (7) über weitere elastische Elemente (20) ein innerer Gelenkkörper (8) lagert, dadurch gekennzeichnet, daß die elastischen Elemente (20,20a) des äußeren Gelenkkörpers (7) aus in den Außenwandungen gehaltenen federnden Streben (11,12) bestehen, die sich kreuzend angeordnet sind und jeweils im Kreuzungspunkt (13) fluchtenden innere Verbindungsachsen (9,10 und 22,23) für den Gelenkkörper (8) aufnehmen, der integrierte Federelemente (20b) aufweist, an denen sich das Gestell (2) abstützt und senkrecht zu diesen inneren Verbindungsachsen (9,10) die weiteren äußeren Verbindungsachsen (22,23) angeordnet und mit dem Element (1) verbunden sind und diese Achsen (22,23) mit den inneren Achsen (9,10) sich in einem Punkt innerhalb des Gelenkes (5) schneiden, wobei senkrecht auf diesen Achsen (9,10 und 22,23) eine weitere Verbindungsachse (29) steht.

2. Vorrichtung nach Anspruch 1, durch gekennzeichnet, daß die beiden Gelenkkörper (7,8) aus Hohlwürfeln gebildet sind, wobei der äußere Gelenkkörper (7) zwischen ausgesparten Außenwänden die Streben (11,12) aufnimmt, welche jeweils diagonal angeordnet sind, die sich in Achsrichtung der Verbindungsachsen (9,10 bzw. 22,23) erstrecken.

3. Vorrichtung nach Anspruch 1 oder 2, dadurch gekennzeichnet, daß der innere Gelenkkörper (8) aus einem Würfel mit einer im Querschnitt quadratischen Durchdringung (25) besteht, in der ein elastisches Element (20b) angeordnet ist, das kreuzende Streben (27,28) umfaßt, die im Kreuzpunkt (13a) die Verbindungsachse (29) zum Gestell (2) aufnehmen.

4. Vorrichtung nach Anspruch 2 oder 3, dadurch gekennzeichnet, daß die Verbindungsachsen (9,10,22,23,29) als Bolzen ausgebildet sind, die jeweils mit dem elastischen Element (20,20a,20b) und dem Tragbeschlag (6) bzw. dem inneren Gelenkkörper (8) über eine Schrumpfverbindung befestigt sind.

## Claims

1. Apparatus for the non-interacting fastening of a payload to a carrying body (6), in particular to a satellite body via flexible connection elements (1) connected to a frame, the connection element (1) comprising a joint (5) having an outer joint body (7), which joint is held in the carrying body (6) by means of at least two elastic elements (20a) and inside the outer joint body (7) supports an inner joint body (8) by means of further elastic elements (20), characterized in that the elastic elements (20, 20a) of the outer joint body (7) comprise resilient struts (11, 12) which are held in the outer walls, are disposed so as to intersect and accommodate in each case at the point of intersection (13) aligned inner connection shafts (9, 10 and 22, 23) for the joint body (8), which has integrated spring elements (20b) on which the frame (2) is supported and at right angles to said inner connection shafts (9, 10) the further outer connection shafts (22, 23) are disposed and connected to the element (1) and said shafts (22, 23) intersect with the inner shafts (9, 10) at a point inside the joint (5), a further connection shaft (29) being disposed perpendicular to said shafts (9, 10 and 22, 23).

2. Apparatus according to claim 1, characterized in that the two joint bodies (7, 8) are formed by hollow cubes, the outer joint body (7) accommodating between recessed outer walls the struts (11, 12), which are each disposed diagonally, which extend in an axial direction of the connection shafts (9, 10 and/or 22, 23).

3. Apparatus according to claim 1 or 2, characterized in that the inner joint body (8) comprises a cube having a penetrated portion (25), which is square in cross-section and in which is disposed an elastic element (20b) embracing intersecting struts (27, 28), which at the point of intersection (13a) accommodate the connection shaft (29) to the frame (2).

4. Apparatus according to claim 2 or 3, characterized in that the connection shafts (9, 10, 22, 23, 29) take the form of pins which are fastened in each case to the elastic element (20, 20a, 20b) and to the carrying brace (6) and/or the inner joint body (8) via a shrink joint.

## Revendications

1. Dispositif pour fixer par accouplement une charge utile sur un corps porteur (6), en particulier le corps d'un satellite par l'intermédiaire d'éléments de liaison flexibles (1) reliés à un châssis et dont chacun est constitué d'une articulation (5) comportant un corps articulé externe (7) maintenu dans le corps porteur (6) par au moins deux éléments élastiques (20a) et portant à l'intérieur du corps articulé externe (7) par l'intermédiaire d'autres éléments élastiques (20) un corps articulé interne (8), caractérisé en ce que :
- les éléments élastiques (20, 20a) du corps externe (7) sont constitués de barres élastiques (11, 12) maintenues dans les parois extérieures et disposées en croix,
- les points de croisement (13) des barres (11, 12) sont équipés, vers l'intérieur, d'axes de liaison alignés deux à deux (9, 10 et 22, 23) destinés à recevoir le corps articulé (8) comportant des éléments élastiques intégrés (20b) sur lesquels s'appuie le châssis (2) et perpendiculairement à ces axes de liaison interne (9, 10) sont disposés les autres axes de liaison externe (22, 23) reliés à l'élément (1), et ces axes (22, 23) se coupent avec les axes (9, 10) en un point situé à l'intérieur de l'articulation (5) et où est monté un autre axe de liaison (29) perpendiculaire aux axes précédents.

2. Dispositif selon la revendication 1, caractérisé en ce que les deux corps articulés (7, 8) sont constitués de cubes creux, le corps externe (7) reçoit les barres (11, 12) disposées entre les parois évidées extérieures, disposées chacune en diagonales qui s'étendent en direction de l'axe des axes de liaison (9, 10 ou 22, 23).

3. Dispositif selon la revendication 1 ou 2, caractérisé en ce que le corps articulé interne (8) est constitué d'un cube percé d'un alésage (25) de section carrée à l'intérieur duquel est monté un élément élastique (20b) présentant des barres en croix (27, 28) recevant à leur croisement (13a) l'axe de liaison (29) au châssis (2).

4. Dispositif selon la revendication 2 ou 3, caractérisé en ce que les axes de liaison (9, 10, 22, 23, 29) sont constitués de tiges rendues solidaires, en retrait, de l'élément élastique (20, 20a, 20b) du corps porteur (6) et du corps articulé interne (8).
